# EUROPEAN PATENT SPECIFICATION

(11) **EP 0 624 722 B1**
(45) Date of publication and mention of the grant of the patent: **03.12.1997**
(21) Application number: 94302426.5
(22) Date of filing: 06.04.1994
(51) Int. Cl.: F02D 41/32, F02D 41/26, F02M 39/02, F02M 37/10

(54) **Method & apparatus for operating a fuel pump of a motor vehicle**
Verfahren und Vorrichtung zum Steuern einer Kraftstoffpumpe eines Kraftfahrzeuges
Procédé et appareil pour commander la pompe de carburant d'un véhicule à moteur

(30) Priority: 08.05.1993 GB 9309779
(43) Date of publication of application: 17.11.1994
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE SOCIETE ANONYME, 92506 Rueil Malmaison Cedex (FR)
(72) Inventor: Emberson, Matthew David, Basildon, Essex SS13 1RA (GB); Snares, Ian, Upminster, Essex RM14 1PN (GB)
(74) Representative: Messulam, Alec Moses

(56) References cited:
- US-A- 4 565 173
- US-A- 4 884 204
- US-A- 5 055 758
- US-A- 5 291 578
- VDI-BERICHT 687, 1988, pages 401-412
- 16. ISATA, FLORENCE, 1987, paper 87016

## Description

This invention relates to a method and apparatus for the control of a fuel pump of a motor vehicle.

Internal combustion engines such as diesel and petrol fuelled engines of motor vehicles are required to operate throughout a wide range of operating speeds and loads whereby the fuel needs are continually fluctuating according to the engine power demanded.

In the case of engines in which fuel is injected into the combustion cylinders, the injectors are customarily fed from a fuel pump the output of which is often in excess of the fuel requirements of the engine, as in the case of deceleration for example. The excess fuel pumped has been returned to the fuel tank.

This practice has been recognised for some time to be undesirable from the point of view of economy and the need to minimise environmental pollution both affected by the formation of vapours in the process of returning the sometimes hot fuel to the fuel tank.

There have been many proposals made for the control of fuel pump speeds in accordance with the fuel requirements of an engine, sometimes with the expressed aim to reduce environmental pollution.

In this connection reference may be made to the disclosures of the following published patent specifications:- GB 2070802A, GB 2120411A, GB 2229554A, EP 423636A, US 4205648, US 4248194, US 4249119, US 4565173, US 4728264, US 4800859, US 4940034, US 4951636, PCT WO 82/04097, DE 3119899, DE 4036905 and DD 227193. In particular, patent document US 4565173 discloses a motor-driven fuel pump and fuel injector controller which receives a mixture of analog inputs and high-low digital inputs from engine sensors, and then calculates and delivers an appropriate injector timing and fuel pump power duty cycle.

The general outlay of a fuel injection and pump control is shown in fig.3 and the claims of US-A-4565173, showing: a controller 20 operating a fuel pump 23/24 of a motor vehicle, the fuel pump being electrically connected to a pump driver 23, the pump driver being further electrically connected to a signal processor, the signal processor 201-203 (CPU,RAM,ROM) being connected to an electrical supply of the motor vehicle and to a communication interface,coded digitised signals from engine condition sensors (Q, ACCEL SWITCH; A/D-converter) defining the fuel requirements of the motor vehicle are passed to the signal processor via the communications interface, the signal processor 201 then communicating pulse width information to the pump driver, thus controlling the rate of pumping of the fuel pump in accordance with the defined fuel requirements at any instant.

A serial one wire bus for automotive control, the ABUS. is known from VDI-BERICHTE 687,1988, P. 401 - 412 for transfer of data such as RPM or temperature between different CPU's .

Despite the proposals of the above-mentioned disclosures, there has been a continuing need to improve the manner of control of electric fuel pumps in motor vehicles.

Accordingly, the present invention provides a method of operating a fuel pump of a motor vehicle, the fuel pump being electrically connected to a pump driver, the pump driver being further electrically connected to a signal processor, the signal processor being connected to an electrical supply of the motor vehicle and to a serial communications link interface; characterised in that the serial communications link interface is configured for two way communication with a vehicle engine management system via a serial communication bus, the method comprising: coded digitized signals from the engine management system defining the fuel requirements of the motor vehicle being passed to the signal processor via the serial communications link interface; the signal processor then communicating with the pump driver to control the rate of pumping of the fuel pump in accordance with the defined fuel requirements at any instant; and the signal processor communicating with the engine management system via the serial communication bus so that the engine management system can verify the correct functioning of the fuel pump operation.

The coded digitised signals can be obtained from sensors which sense one or more engine operating parameters. In the preferred method of operation at least some of the coded digitised signals are from a vehicle engine management system.

The pump driver can control the power fed to the electric fuel pump of the motor vehicle by Pulse Width Modulation or Phase Width Modulation. For Pulse Width Modulation the width of the fixed amplitude pulse is proportional to the instantaneous signal amplitude.

According to a second aspect of the present invention there is provided an apparatus for operating a fuel pump of a motor vehicle according to the method set forth above, the apparatus comprising a pump driver for electrical connection to the fuel pump, the pump driver being further electrically connected to a signal processor, the signal processor being connected to an electrical supply of the motor vehicle and to a serial communications link interface; characterised in that the serial communications link interface is configured for two way communication with a vehicle engine management system via a serial communication bus, the serial communications link interface being configured for receiving coded digitized signals defining the fuel requirements of the motor from the engine management system via the serial communications bus, the signal processor being configured to communicate with the pump driver to control the rate of pumping of the fuel pump in accordance with the defined fuel requirements at any instant and the signal processor being configured to communicate with the engine management system via the serial communication bus so that the engine management system can verify the correct functioning of the fuel pump operation.

The present invention permits the production of a compact integral unit which may be mounted near to the fuel pump of the vehicle, optionally inside the fuel tank, with a view to minimising the effects of a high-current switched power supply to the pump in terms of power loss and noise on other electrical apparatus in the vehicle. For example, when a fuel pump is to be located in the fuel tank of a motor vehicle, subject to the apparatus being constructed to prevent undesirable contamination by fuel ingress, the apparatus may also be located in the fuel tank. This can be of particular value when the apparatus is for use in association with an immobiliser device because the device will be relatively inaccessible for being tampered with, removed or replaced by would-be vehicle thieves.

The apparatus of this invention is preferably an integral apparatus in the form of a single unit of assembled components, for example on a single circuit board.

By apparatus for an electric fuel pump of a motor vehicle, we mean a module which has as its primary function, and preferably as its sole function, that of controlling the fuel pump, in particular the speed of operation of the fuel pump, of the vehicle and more preferably also the enabling of the pump. Preferably the pump is of the rotary type.

The module is adapted to control the speed of the operation of the fuel pump by controlling the electrical power fed to the pump in a manner aimed at ensuring that the quantity of fuel supplied to the engine is correctly that required by the engine at any instant during its operation.

The signal processor may comprise a microprocessor, microcomputer, microcontroller or discrete logic system but is preferably a microcontroller. The signal processor should include ROM and RAM; ROM and RAM having the conventional meanings of read only memory and random access memory respectively. Preferably it also includes non-volatile memory, more preferably of the type commonly designated E² PROM; the E²P signifying Electrically Erasable Programmable. The incorporation of non-volatile memory in the signal processor provides for the connection of an immobiliser device, such as a vehicle security device, to the signal processor via the serial bus and serial interface, for example.

The signal processor should be such that it can selectively interpret the inputs to be connected to it eg from an interrupt device or from an immobiliser or engine management system.

The communications link interface comprises interface circuitry to connect the serial communications bus to the signal processor such that the signal processor can utilize the serial data being fed to it and such that output signals from the signal processor can be utilized by other devices connected to the bus. For example, an electronic device such as an engine management system connected to the bus is able to communicate, via the link interface, in two-way fashion with the signal processor so that each can check that the other is working.

By serial communications bus we mean to include single or multiple wire serial data conductors and mean to include serial circuits coded CAN and that coded by the Ford Motor Company as SCP and the like.

The pump driver which is connected to the signal processor in the apparatus has the function of switching a high current power supply to the fuel pump and thereby controlling the power fed to a fuel pump to which it is connectable and may comprise a device such as a silicon relay.

Commercially available devices which may be employed as pump drivers include the VN05 power actuator supplied by the SGS-Thomson Microelectronics Group for example.

The electrical supply of the motor vehicle and to which the signal processor is connectable may comprise a direct current supply from the battery of the vehicle.

The immobiliser device may be capable of transmitting to the signal processor via the communications bus and appropriate serial communications link interface, a unique security code which can be matched by the signal processor against the same code pre-programmed into non-volatile memory of the signal processor. The immobilizer device may comprise a manually operated key pad or a receiver and a pre-programmed transmitter combination for example. With such an immobilizer, in the absence of receiving the correct code the signal processor fails to fully activate the apparatus to enable the fuel pump thereby immobilising the vehicle. Connection of the immobilizer to the signal processor is preferably via the serial communications bus.

The interrupt device which may be electrically connected to the apparatus via the signal processor may be a device whereby the apparatus is activated to stop the pump operation in the event of an emergency such as in a crash situation. Such a safety interrupt device may be an inertia switch for example. Other safety interrupt devices may be responsive to high temperatures such as could occur in a fire, sudden loss of fuel pressure such as could occur in the event of a fractured fuel pipe, excessive engine speeds such as may recur in engine runaway situations for example.

Thus, within its primary function the apparatus of this invention may not only supply controlled electric power to the fuel pump of a motor vehicle to ensure that the quantity of fuel supplied to the engine is that demanded by the engine in its operation and preferably also enable the fuel pump, but optionally also effect fuel shut off in the case of emergency situations arising and additionally be adaptable to provide an immobilizing, security facility, all through pump control.

Connection of the apparatus to a serial communications bus permits the connection of electronic devices to the bus thereby allowing associated data inputs from such devices to be received and utilized by the signal processor via the serial communications link interface. For example, an engine management system providing fuel supply rate data may be connected to the signal processor via the serial communications bus and link interface.

The invention will now be illustrated, by way of example, with reference to the accompanying drawings in which:
Figure 1 illustrates in block diagram form apparatus according to this invention; and
Figure 2 illustrates in block diagram form the apparatus of Figure 1 connected to a motor vehicle fuel pump within a fuel tank.

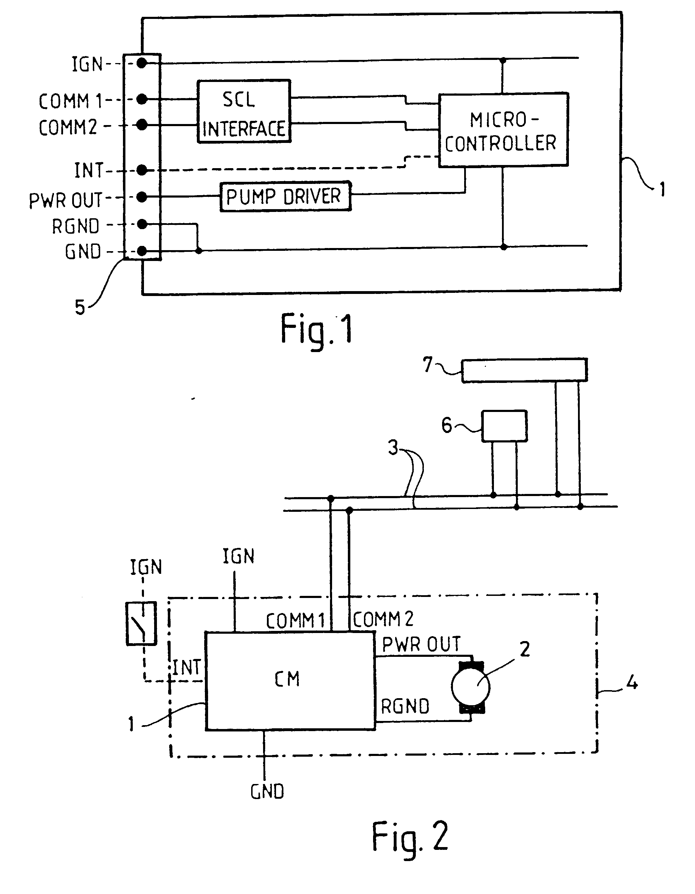

In the drawings in which like numbers correspond; 1 indicates generally an apparatus according to this invention. The signal processor is a microcontroller supplied by Texas Instruments Inc. under the designation TMS 370 which includes a non-volatile memory designated E² PROM. Electrical connections are made between the microcontroller and the ignition (IGN) and ground (GND) terminals on the terminal connector 5. Electrical connections are also made between the microcontroller and the serial communications link interface (SCL Interface), also between the microcontroller and the pump driver and from the pump driver to the terminal connector 5 (PWR OUT). A return ground terminal (RGND) is provided on the terminal connector 5 by an electrical connection from the GND connection as shown. Connections between the SCL Interface and the terminal connector 5 (Comm 1 and Comm 2) and between the terminal connector 5 and the serial communications bus 3 (Figure 2) are also made. All such connections are made in conventional manner. As shown in dotted line, provision may be made for an interrupt device to be connected to the module via the interrupt terminal (INT) on terminal connector 5. Such interrupt device may be an inertia switch for example.

Serial communications bus 3 is a multiwire serial data conductor designed for use with the protocol coded by the Ford Motor Company as SCP.

The SCL Interface is a custom electronic circuit designed for use with the SCP protocol.

Figure 2 shows the connections that may be made via the terminal connector 5 (shown in Figure 1) to the apparatus 1, represented as being installed along with the fuel pump 2 within fuel tank 4. Also shown in Figure 2 are connections made between each of the engine management system 7 and vehicle immobilizer module 6 and the serial communications bus 3.

It will be appreciated that in the arrangement shown in Figure 2 and assuming connection of an interrupt device to the control module, a five-way connector into the fuel tank is required for the module 1.

In operation, coded digitalized signals put on to the communications serial bus 3 by the engine management system 7 which, with the application of predictive algorithms, has processed data received from various associated engine sensors to thereby define the fuel requirements of the engine, are accepted and interpreted by the microcontroller. The microcontroller then processes the data and sends an appropriate signal to the pump driver which in turn supplies high current power to the fuel pump causing its speed to be adjusted to suit the fuel rate flow required by the engine as indicated by the digitalized signals. The pump driver controls the high current output to the pump by phase width modulation, the interpretation of the mark to space ratio required being undertaken by the microcontroller.

Data may be received from sensors monitoring any combination of the following parameters, engine revolutions, vehicle braking, fuel flow, and manifold pressure. This list is not intended to be exhaustive.

The immobilizer module 6 is a key pad device into which a code can be tapped. The code tapped is transmitted in digitalized signal form onto the serial communications bus 3.

When the apparatus 1 and immobilizer module 6 are initially connected via the serial communications bus 3 a unique code selected from the range of options provided by the immobiliser is programmed into the non-volatile memory of the microcontroller whereby the apparatus 1 will become fully activated to enable and control the pump only if the digitalized signal received by the microcontroller from the immobilizer module 6 matches. Once the correct code is received and the apparatus 1 is fully activated, a "received" code is put back onto the serial bus 3 for the immobilizer module which then latches the system so that no immobilization can occur via the immobiliser module until the vehicle's electrical supply to the microcontroller is removed as by turning off at the ignition switch. When the vehicle's electrical supply to the microcontroller is removed, the fuel pump is stopped and will not be restarted until both the supply is restored and the correct "start" code is received by the microcontroller from the immobilizer module 6.

For convenience, the E² PROM is initially installed in the microcontroller with a known "unprogrammed" security code with for example each bit set to 1. While this security code is maintained, assuming no other value has previously been programmed, the apparatus becomes set and maintained in the fully activated state subject to the connection of the vehicle power supply.

The use of data signals via a serial communications bus and the serial communications link interface permits that for example every tenth of a second the engine management system 7 which preferably verifies that it is itself functioning correctly, can verify that the serial communication link interface and the apparatus 1 are functioning correctly. This allows both self-diagnostics (while the vehicle is running for example) and service diagnostics (using applicable equipment linked via the same serial communications bus) for example by a franchised vehicle dealer, to be undertaken.

The interrupt device when connected to the apparatus of this invention provides for direct interruption of the fuel pump power supply. In the present illustration the interrupt device envisaged for connection to the microcontroller of the apparatus is an inertia switch which is positioned such as to be activated by the vehicle to which it is attached being involved in a crash. The inertia switch elected is of the normally open kind which is closed by the effects of inertia in a crash situation. The closing of such a switch connected to the apparatus 1 causes the microcontroller to react to cause the pump driver to cut off high current power to the pump and thereby cut off fuel flow from the vehicle fuel tank.

It will be appreciated that additional or alternative interrupt devices may be employed. An interrupt device which is sensitive to high temperatures is one which can cause the fuel to be shut off in the event of fire. Several devices could be sited at various positions around the vehicle and may rely on different activating features for which some alternatives are indicated earlier herein. When provision is made in the apparatus for multiple interrupt devices to be connected, clearly those connections which are unused should be connected to the vehicle power supply IGN in order for the apparatus to function in a fully activated state.

It will be appreciated that the apparatus of this invention allows for multiple inputs for the control of an electric fuel pump and for the apparatus to be located close to the pump and in the case of an in-fuel-tank mounted pump the apparatus is ideally incorporated as part of the pump assembly.

## Claims

1. A method of operating a fuel pump of a motor vehicle, the fuel pump (2) being electrically connected to a pump driver, the pump driver being further electrically connected to a signal processor, the signal processor being connected to an electrical supply of the motor vehicle and to a serial communications link interface; characterised in that the serial communications link interface is configured for two way communication with a vehicle engine management system via a serial communication bus (3), the method comprising: coded digitized signals from the engine management system defining the fuel requirements of the motor vehicle being passed to the signal processor via the serial communications link interface; the signal processor then communicating with the pump driver to control the rate of pumping of the fuel pump (2) in accordance with the defined fuel requirements at any instant; and the signal processor communicating with the engine management system via the serial communication bus (3) so that the engine management system can verify the correct functioning of the fuel pump operation.

2. A method as claimed in Claim 1, characterised in that the signal processor includes non-volatile memory which may store a security code, the signal processor being connected through the serial communications link interface to an immobiliser device (6) which may send a security code to the signal processor, the method comprising the steps of: sending the security code from the immobiliser device (6) via the serial communications link interface to the signal processor; the signal processor comparing the codes and then fully activating the apparatus to enable and control the fuel pump (2) only if the codes match.

3. A method as claimed in Claim 2, characterised in that when a correct code is received by the signal processor, a received code is put back onto the serial communications bus (3) for the immobiliser (6) so that no immobilisation can occur via the immobiliser.

4. Apparatus for operating a fuel pump of a motor vehicle according to the method of Claim 1, the apparatus comprising a pump driver for electrical connection to the fuel pump (2), the pump driver being further electrically connected to a signal processor, the signal processor being connected to an electrical supply of the motor vehicle and to a serial communications link interface; characterised in that the serial communications link interface is configured for two way communication with a vehicle engine management system via a serial communication bus (3), the serial communications link interface being configured for receiving coded digitized signals defining the fuel requirements of the motor from the engine management system via the serial communications bus (3), the signal processor being configured to communicate with the pump driver to control the rate of pumping of the fuel pump (2) in accordance with the defined fuel requirements at any instant and the signal processor being configured to communicate with the engine management system via the serial communication bus (3) so that the engine management system can verify the correct functioning of the fuel pump operation.

5. Apparatus as claimed in Claim 4, characterised in that the signal processor includes non-volatile memory which may store a security code, the signal processor being connected through the serial communications link interface to an immobiliser device (6) which may send a security code to the signal processor, the apparatus becoming fully activated to enable and control the fuel pump (2) only if the codes match.

6. Apparatus as claimed in Claim 5, characterised in that the non-volatile memory is initially installed with a known security code which keeps the apparatus in a fully activated state to enable and control the fuel pump (2) as long as the known security code is maintained.

7. Apparatus as claimed in Claim 5 or Claim 6, characterised in that the non-volatile memory is programmed with a unique code selected by the immobiliser (6) when the immobiliser is initially connected to the signal processor through the serial communications link interface.

8. Apparatus as claimed in any one of Claims 5 to 7, characterised in that when a correct code is received by the signal processor, a received code is put back onto the serial communications bus (3) for the immobiliser (6) so that no immobilisation can occur via the immobiliser.

9. Apparatus as claimed in any one of Claims 5 to 8, characterised in that the immobiliser (6) is a key pad device into which a code can be tapped.

10. Apparatus as claimed in any one of Claims 4 to 9, characterised in that the signal processor is connected to a safety interrupt device.

11. Apparatus as claimed in any one of Claims 4 to 10, characterised in that the apparatus is adapted for installation with the fuel pump (2) in a fuel tank (4) of a motor vehicle.

## Patentansprüche

1. Eine Methode zum Betrieb einer Kraftstoffpumpe in einem Motorfahrzeug, wobei die Kraftstoffpumpe (2) elektrisch an einen Pumpentreiber angeschlossen ist, wobei der Pumpentreiber ausserdem elektrisch an einen Signalprozessor angeschlossen ist, wobei der Signalprozessor an eine elektrische Zufuhr des Motorfahrzeugs und an eine Serien-Kommunikations-Verbindungs-Schnittstelle angeschlossen ist; dadurch gekennzeichnet, dass die Serien-Kommunikations-Verbindungs-Schnittstelle für eine zweispurige Kommunikation mit einem Fahrzeug-Motorsteuersystem über einen Serien-Kommunikationsbus (3) ausgelegt ist, wobei die Methode enthält : kodierte, chiffrierte Signale vom Motorsteuersystem, die den Kraftstoffbedarf des Motorfahrzeugs bestimmen, wobei sie über die Serien-Kommunikations-Verbindungs-Schnittstelle an den Signalprozessor gegeben werden, wobei der Signalprozessor sich dann mit dem Pumpentreiber in Verbindung setzt, um die Pumpleistung der Kraftstoffpumpe (2) in Übereinstimmung mit dem festgelegten Kraftstoffbedarf jederzeit zu steuern und wobei der Signalprozessor mit dem Motorsteuersystem über den Serien-Kommunikationsbus (3) in Verbindung steht, so dass das Motorsteuersystem das korrekte Funktionieren des Kraftstoff-Pumpbetriebs überprüfen kann.

2. Eine Methode nach Anspruch 1, dadurch gekennzeichnet, dass der Signalprozessor einen Permanentspeicher enthält, der einen Sicherheitskode speichern kann, wobei der Signalprozessor über eine Serien-Kommunikations-Verbindungs-Schnittstelle an eine Wegfahrsperre oder Blockierungsvorrichtung (6) angeschlossen ist, die einen Sicherheitskode an den Signalprozessor senden kann, wobei die Methode folgende Schritte beinhaltet : Senden des Sicherheitskodes von der Wegfahrsperre oder Blockierungsvorrichtung (6) über die Serien-Kommunikations-Verbindungs-Schnittstelle an den Signalprozessor; wobei der Signalprozessor die Kodes vergleicht und dann den Apparat vollständig aktiviert, um die Kraftstoffpumpe (2) nur dann anzutreiben und zu steuern, wenn die Kodes passen.

3. Eine Methode nach Anspruch 2, dadurch gekennzeichnet, dass beim Empfang eines korrekten Kodes durch den Signalprozessor ein empfangener Kode zurück an den Serien-Kommunikationsbus (3) für die Wegfahrsperre oder Blockierungsvorrichtung (6) geleitet wird, so dass kein Anhalten über sie stattfinden kann.

4. Ein Apparat zum Betrieb einer Kraftstoffpumpe eines Motorfahrzeugs nach der Methode des Anspruchs 1, wobei der Apparat einen Pumpentreiber für den elektrischen Anschluss an die Kraftstoffpumpe (2) enthält, wobei der Pumpentreiber ausserdem elektrisch an einen Signalprozessor angeschlossen ist, wobei der Signalprozessor an eine elektrische Zufuhr des Motorfahrzeugs und an eine Serien-Kommunikations-Verbindungs-Schnittstelle angeschlossen ist, dadurch gekennzeichnet dass die Serien-Kommunikations-Verbindungs-Schnittstelle für eine zweispurige Kommunikation mit einem Fahrzeug-Motorsteuersystem über einen Serien Kommunikationsbus (3) ausgelegt ist, wobei die Serien-Kommunikations-Verbindungs-Schnittstelle zum Empfang von kodierten, chiffrierten Signalen ausgelegt ist, die den Kraftstoffbedarf des Motors vom Motorsteuersystem über einen Serien-Kommunikationsbus (3) festlegen, wobei der Signalprozessor zur Kommunikation mit dem Pumpentreiber ausgelegt ist, um die Pumpleistung der Kraftstoffpumpe (2) in Übereinstimmung mit dem festgelegten Kraftstoffbedarf jederzeit zu steuern und wobei der Signalprozessor zur Kommunikation mit dem Motorsteuersystem über den Serien-Kommunikationsbus (3) ausgelegt ist, so dass das Motorsteuersystem das korrekte Funktionieren des Kraftstoffpumpbetriebs überprüfen kann.

5. Ein Apparat nach Anspruch 4, dadurch gekennzeichnet, dass der Signalprozessor einen Permanentspeicher enthält, der einen Sicherheitskode speichern kann, wobei der Signalprozessor über die Serien-Kommunikations-Verbindungs-Schnittstelle an eine Wegfahrsperre oder Blockierungsvorrichtung (6) angeschlossen ist, die einen Sicherheitskode an den Signalprozessor senden kann, wobei der Apparat vollständig aktiviert wird, um die Kraftstoffpumpe (2) nur dann anzutreiben und zu steuern, wenn die Kodes passen.

6. Ein Apparat nach Anspruch 5, dadurch gekennzeichnet, dass der Permanentspeicher zuerst mit einem bekannten Sicherheitkode installiert wird, der den Apparat in einem vollständig aktivierten Zustand hält, um die Kraftstoffpumpe (2) anzutreiben und zu steuern, solange der bekannte Sicherheitskode beibehalten wird.

7. Ein Apparat nach Anspruch 5 oder 6, dadurch gekennzeichent, dass der Permanentspeicher mit einem einzigen Kode programmiert wird, der durch die Wegfahrsperre oder Blockierungsvorrichtung (6) gewählt wirid, wenn die Wegfahrsperre oder Blockierungsvorrichtung zuerst an den Signalprozessor über die Serien- Kommunikations-Verbindungs-Schnittstelle angeschlossen wird.

8. Ein Apparat nach irgendeinem der Ansprüche 5 bis 7, dadurch gekennzeichnet, dass beim Empfang eines korrekten Kodes durch den Signalprozessor, ein empfangener Kode zurück auf den Serien-kommunikationsbus (3) für die Wegfahrsperre oder Blockierungsvorrichtung (6) geleitet wird, so dass kein Anhalten über die Wegfahrsperre oder Blockierungsvorrichtung stattfindet.

9. Ein Apparat nach irgendeinem der Ansprüche 5 bis 8, dadurch gekennzeichnet, dass die Wegfahrsperre oder Blockierungsvorrichtung (6) eine Drucktastenvorrichtung ist, in die ein Kode eingetippt werden kann.

10. Ein Apparat nach irgendeinem der Ansprüche 4 bis 9, dadurch gekennzeichnet, dass der Signalprozessor an eine Sicherheits-Unterbrechungsvorrichtung angeschlossen ist.

11. Ein Apparat nach irgendeinem der Ansprüche 4 bis 10, dadurch gekennzeichnet, dass der Apparat zur Installierung mit einer Kraftstoffpumpe (2) in einem Kraftstofftank (4) eines Motorfahrzeugs geeignet ist.

## Revendications

1. Procédé de mise en oeuvre d'une pompe à carburant d'un véhicule à moteur, la pompe à carburant (2) étant reliée électriquement à un circuit d'attaque de pompe, le circuit d'attaque de pompe étant en outre électriquement relié à un processeur de signaux, le processeur de signaux étant relié à une alimentation électrique du véhicule à moteur et à une interface de liaison de communications série, caractérisé en ce que l'interface de liaison de communications série est configurée pour des communications dans les deux sens avec un système de gestion de moteur de véhicule par l'intermédiaire d'un bus de communications série (3), le procédé comprenant : des signaux numérisés codés provenant du système de gestion de moteur définissant les exigences en carburant du véhicule à moteur qui sont transmis au processeur de signaux par l'intermédiaire de l'interface de liaison de communications série, le processeur de signaux communiquant alors avec le circuit d'attaque de pompe pour commander le débit de pompage de la pompe à carburant (2) conformément aux exigences en carburant définies à tout instant quelconque, et le processeur de signaux communiquant avec le système de gestion du moteur par l'intermédiaire du bus de communications série (3) de sorte que le système de gestion du moteur peut vérifier le fonctionnement correct de la mise en oeuvre de la pompe à carburant.

2. Procédé selon la revendication 1, caractérisé en ce que le processeur de signaux comprend une mémoire non volatile qui peut mémoriser un code de sécurité, le processeur de signaux étant relié par l'intermédiaire d'une interface de liaison de communications série à un dispositif d'immobilisation (6) qui peut envoyer un code de sécurité au processeur de signaux, le procédé comprenant les étapes consistant à : envoyer le code de sécurité provenant du dispositif d'immobilisation (6), par l'intermédiaire de l'interface de liaison de communications série, au processeur de signaux, le processeur de signaux comparant les codes puis activant complètement l'appareil pour actionner et commander la pompe à carburant (2) uniquement si les codes correspondent.

3. Procédé selon la revendication 2, caractérisé en ce que, lorsqu'un code correct est reçu par le processeur de signaux, un code reçu est renvoyé sur le bus de communications série (3) pour le dispositif d'immobilisation (6) de sorte qu'aucune immobilisation ne peut se produire par l'intermédiaire du dispositif d'immobilisation.

4. Appareil destiné à mettre en oeuvre une pompe à carburant d'un véhicule à moteur selon le procédé de la revendication 1, l'appareil comprenant un circuit d'attaque de pompe destiné à une connexion électrique vers la pompe à carburant (2), le circuit d'attaque de pompe étant en outre électriquement relié à un processeur de signaux, le processeur de signaux étant relié à une alimentation électrique du véhicule à moteur et à une interface de liaison de communications série, caractérisé en ce que l'interface de liaison de communications série est configurée pour des communications dans les deux sens avec un système de gestion de moteur de véhicule par l'intermédiaire d'un bus de communications série (3), l'interface de liaison de communications série étant configurée de façon à recevoir des signaux numérisés codés définissant les exigences en carburant du moteur provenant du système de gestion du moteur par l'intermédiaire du bus de communications série (3), le processeur de signaux étant configuré pour communiquer avec le circuit d'attaque de pompe afin de commander le débit de pompage de la pompe à carburant (2) en conformité avec les exigences en carburant définies à tout instant et le processeur de signaux étant configuré pour communiquer avec le système de gestion du moteur par l'intermédiaire du bus de communications série (3) de sorte que le système de gestion du moteur peut vérifier le fonctionnement correct de la mise en oeuvre de la pompe à carburant.

5. Appareil selon la revendication 4, caractérisé en ce que le processeur de signaux comprend une mémoire non volatile qui peut mémoriser un code de sécurité, le processeur de signaux étant relié par l'intermédiaire de l'interface de liaison de communications série à un dispositif d'immobilisation (6) qui peut envoyer un code de sécurité au processeur de signaux, l'appareil devenant complètement activé pour actionner et commander la pompe à carburant (2) uniquement si les codes correspondent.

6. Appareil selon la revendication 5, caractérisé en ce que la mémoire non volatile est initialement installée avec un code de sécurité connu qui maintient l'appareil dans un état complètement activé pour actionner et commander la pompe à carburant (2) tant que le code de sécurité connu est conservé.

7. Appareil selon la revendication 5 ou la revendication 6, caractérisé en ce que la mémoire non volatile est programmée avec un code unique sélectionné grâce au dispositif d'immobilisation (6) lorsque le dispositif d'immobilisation est initialement relié au processeur de signaux par l'intermédiaire de l'interface de liaison de communications série.

8. Appareil selon l'une quelconque des revendications 5 à 7, caractérisé en ce que, lorsqu'un code correct est reçu par le processeur de signaux, un code reçu est renvoyé sur le bus de communications série (3) pour le dispositif d'immobilisation (6), de sorte qu'aucune immobilisation ne peut se produire par l'intermédiaire du dispositif d'immobilisation.

9. Appareil selon l'une quelconque des revendications 5 à 8, caractérisé en ce que le dispositif d'immobilisation (6) est un dispositif à clavier à touches sur lequel un code peut être frappé.

10. Appareil selon l'une quelconque des revendications 4 à 9, caractérisé en ce que le processeur de signaux est relié à un dispositif d'interruption de sécurité.

11. Appareil selon l'une quelconque des revendications 4 à 10, caractérisé en ce que l'appareil est adapté pour être installé avec la pompe à carburant (2) est dans un réservoir à carburant (4) d'un véhicule à moteur.
